# EUROPEAN PATENT APPLICATION

(11) **EP 2 421 317 A1**
(43) Date of publication of application: **22.02.2012**
(21) Application number: 11006821.0
(22) Date of filing: 19.08.2011
(51) Int. Cl.: H04W 72/12, H04L 1/00, H04L 5/00

(54) **Method of handling uplink control information reporting and related communication device**

(30) Priority: 19.08.2010 US 375039 P
(71) Applicant: HTC Corporation, Taoyuan County 330 (TW)
(72) Inventor: Jen, Yu-Chih, Taoyuan City Taoyuan County 330 (TW)
(74) Representative: Carstens, Dirk Wilhelm

(57) **Abstract**

A method of handling of a plurality of PUCCH resources of a network of a wireless communication system is disclosed. The method comprises assigning the plurality of PUCCH resources to a mobile device in the wireless communication system dynamically by using a dynamic signaling or semi-statically by using a higher layer signaling.

## Description

### Background of the Invention

### 1. Field of the Invention

The present invention relates to a method used in a wireless communication system and related communication device, and more particularly, to a method of handling uplink control information reporting in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME), serving gateway, etc for NAS (Non Access Stratum) control.

UL control information in the LTE system includes an acknowledgement/negative acknowledgement (ACK/NACK) for downlink (DL) data, a channel quality indicator (CQI), a scheduling request (SR) and multiple-input multiple-output (MIMO) parameters of the UE. The UE may transmit the UL control information by using a dedicated resource. In this situation, the UE transmits the UL control information to an eNB on a physical uplink (UL) control channel (PUCCH) in the LTE system. Resource blocks allocated to the PUCCH in a subframe, i.e., a PUCCH region, locate on edges of a system bandwidth for a low out of band (OOB) emission and a low constraint on UL data scheduling. Besides, the resource blocks hop between slots (intra-subframe hopping) or between subframes (inter-subframe hopping) for gaining frequency diversity. On the other hand, the UE may also transmit the UL control information along with data. In this situation, the UE first multiplexes the UL control information and the data, and then transmits the multiplexed result to the eNB on a physical UL shared channel (PUSCH) in the LTE system. Please note that, the UE can only select the one of the PUCCH and the PUSCH to transmit the UL control information but not both so as to maintain a single carrier property, i.e., a low peak to average power ratio (PAPR).

On the other hand, DL control information in the LTE system includes downlink control information (DCI). The DCI is transmitted on a physical DL control channel (PDCCH), and indicates information of resource assignments for the UE on the UL and the DL by using 4 different DCI formats and their variations. In the LTE system, the PDCCH is transmitted by using one or multiple control channel elements (CCEs). A CCE includes 9 resource element groups (REGs), and a REG includes 4 REs. More specifically, there are 4 PDCCH formats, e.g., PDCCH formats 0, 1, 2 and 3, and these PDCCH formats occupy 1, 2, 4 and 8 CCEs, respectively. The 4 DCI formats with their variations are transmitted on corresponding 4 PDCCH formats.

In the LTE system, a physical DL shared channel (PDSCH) is the main channel for the eNB to transmit data to the UEs. Besides, the PDSCH can also be used for broadcasting system information and transmitting paging to the UEs. Corresponding resources for transmitting the PDSCH are indicated to the UEs in the PDCCH.

A long term evolution-advanced (LTE-A) system, as its name implies, is an evolution of the LTE system. The LTE-A system targets faster switching between power states, improves performance at the coverage edge of an eNB, and includes subjects, such as bandwidth extension, coordinated multipoint transmission/reception (CoMP), UL multiple-input multiple-output (MIMO), etc.

For bandwidth extension, a carrier aggregation (CA) is introduced to the LTE-A system by which two or more component carriers are aggregated to achieve a wider-band transmission. Accordingly, the LTE-A system can support a wider bandwidth up to 100MHz by aggregating a maximum number of 5 component carriers, where bandwidth of each component carrier is 20MHz and is backward compatible with 3GPP Rel-8. The LTE-A system supports the CA for both continuous and non-continuous component carriers with each component carrier limited to a maximum of 110 resource blocks. The CA increases bandwidth flexibility by aggregating the non-continuous component carriers. A component carrier is either used as a UL component carrier or a DL component carrier, but not both.

When the UE is configured with the CA, the UE is allowed to receive and transmit data on one or multiple component carriers to increase the data rate. In the LTE-A system, it is possible for the eNB to configure the UE different numbers of UL and DL component carriers which depend on UL and DL aggregation capabilities, respectively. Moreover, the component carriers configured to the UE necessarily consists of one DL primary component carrier (PCC) and one UL primary component carrier. Component carriers other than the primary component carriers are named UL or DL secondary component carriers (SCCs). The numbers of UL and DL secondary component carriers are arbitrary, and are related to the UE capability and available radio resources. The UL and DL primary component carriers are used for establishing and re-establishing the radio resource control (RRC) connection, and transmitting and receiving the system information.

The UE in the LTE system can only transmit the PUCCH at edges of the system bandwidth for a low OOB emission, and can only selects one of the PUCCH and the PUSCH to transmit the UL control information for a low PAPR. It is expected that the UE in the LTE-A system is going to be equipped with better power amplifiers such that non-contiguous PUSCH allocation and a simultaneous transmission of the PUCCH and the PUSCH are supported. Therefore, novel PUCCH placements for transmitting the UL control information should be discussed. Besides, various resource opportunities and transmission modes should also be considered.

### Summary of the Invention

The present invention therefore provides a method and related communication device for handling uplink control information reporting to solve the abovementioned problems.

A method of handling of a plurality of physical uplink (UL) control channel (PUCCH) resources of a network of a wireless communication system is disclosed. The method comprises assigning the plurality of PUCCH resources to a mobile device in the wireless communication system dynamically by using a dynamic signaling or semi-statically by using a higher layer signaling.

A method of handling uplink (UL) control information (UCI) reporting of a network of a wireless communication system is disclosed. The method comprises indicating a mobile device in the wireless communication system dynamically or semi-statically for the mobile device to transmit the UL control information on at least one of a physical UL control channel (PUCCH) and a physical UL shared channel (PUSCH) to the network.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of an exemplary wireless communication system according to the present disclosure.

Fig. 2 is a schematic diagram of an exemplary communication device according to the present disclosure.

Fig. 3 is a schematic diagram of communication protocol layers for an exemplary wireless communication system.

Fig. 4 is a flowchart of an exemplary process according to the present disclosure.

Fig. 5 is a flowchart of an exemplary process according to the present disclosure.

### Detailed Description

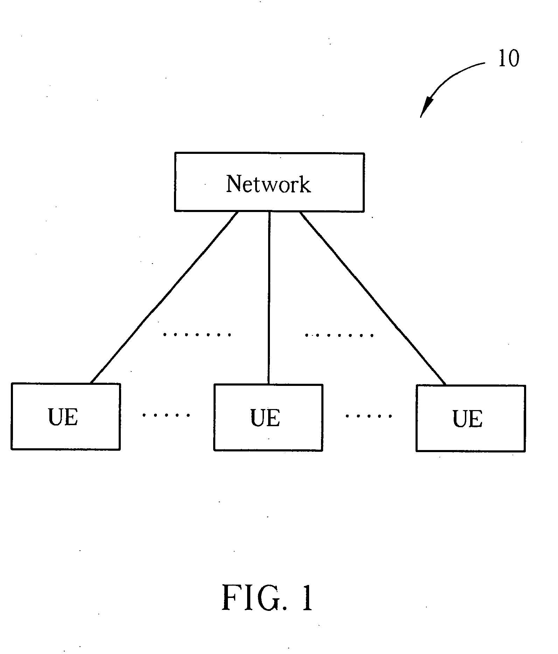

Please refer to Fig. 1, which is a schematic diagram of a wireless communication system 10 according to an example of the present invention. The wireless communication system 10, such as a long term evolution-advanced (LTE-A) system, is briefly composed of a network and a plurality of user equipments (UEs). In Fig. 1, the network and the UEs are simply utilized for illustrating the structure of the wireless communication system 10. Practically, the network can be referred as to an E-UTRAN (evolved-UTAN) comprising a plurality of evolved Node-Bs (eNBs) and relays in the LTE-A system. The UEs can be mobile devices such as mobile phones, laptops, tablet computers, electronic books, and portable computer systems. Besides, the network and a UE can be seen as a transmitter or a receiver according to transmission direction, e.g., for an uplink (UL), the UE is the transmitter and the network is the receiver, and for a downlink (DL), the network is the transmitter and the UE is the receiver.

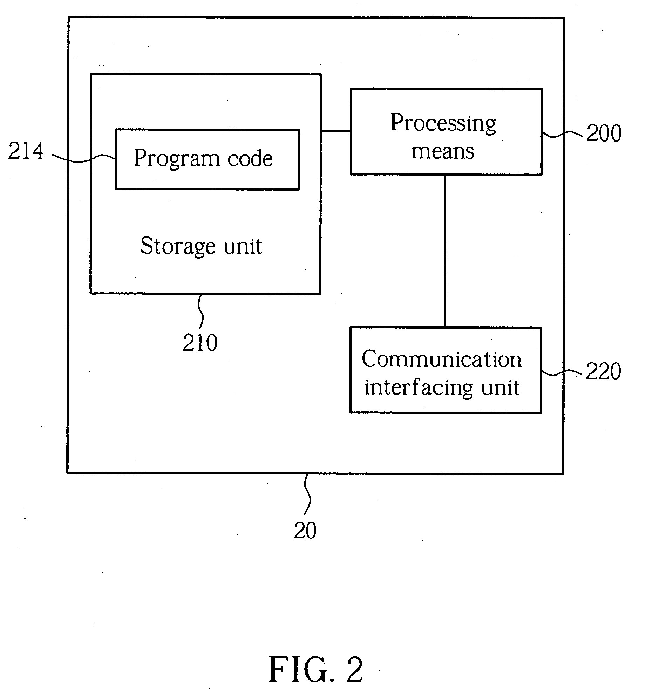

Please refer to Fig. 2, which is a schematic diagram of a communication device 20 according to an example of the present invention. The communication device 20 can be the UE or the network shown in Fig. 1, but is not limited herein. The communication device 20 may include a processor 200 such as a microprocessor or an Application Specific Integrated Circuit (ASIC), a storage unit 210 and a communication interfacing unit 220. The storage unit 210 may be any data storage device that can store a program code 214, accessed by the processor 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a radio transceiver and can exchange wireless signals with the network according to processing results of the processor 200.

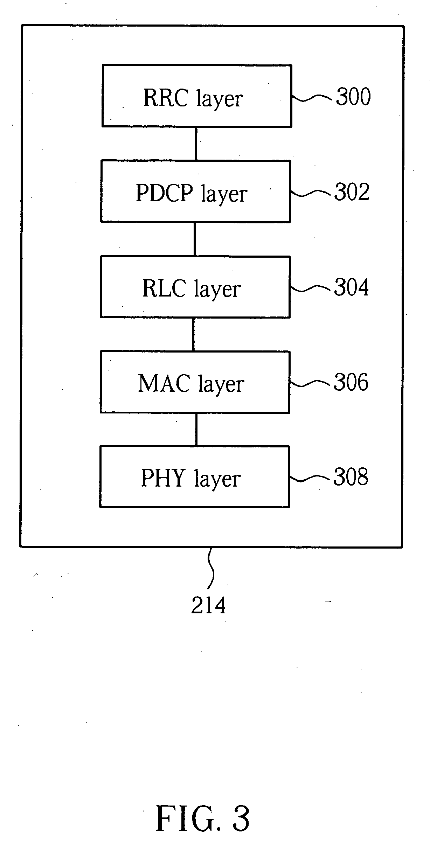

Please refer to Fig. 3, which illustrates a schematic diagram of communication protocol layers for the LTE-Advanced system. The behaviors of some of the protocol layers may be defined in the program code 214 and executed by the processing means 200. The protocol layers from top to bottom are a radio resource control (RRC) layer 300, a packet data convergence protocol (PDCP) layer 302, a radio link control (RLC) layer 304, a medium access control (MAC) layer 306 and a physical (PHY) layer 308. The RRC layer 300 is used for performing broadcast, paging, RRC connection management, measurement reporting and control and radio bearer control responsible for generating or releasing radio bearers. The PDCP layer 302 is used for header compression, ciphering and integrity protection of transmissions, and maintaining delivery order during a handover. The RLC layer 304 is used for segmentation/concatenation of packets and maintaining delivery sequence when packet loses. The MAC layer 306 is responsible for a hybrid automatic repeat request (HARQ) process, multiplexing logical channels, a random access channel (RACH) procedure and maintaining a UL timing alignment. In each HARQ process, an acknowledgement (ACK) is reported to the network if the MAC data/control packet is received and decoded successfully. Otherwise, a negative acknowledgement (NACK) is reported to the network. The PHY layer 308 is used to provide physical channels, e.g. a physical UL control channel (PUCCH), a physical DL control channel (PDCCH), a physical UL shared channel (PUSCH), a physical DL shared channel (PDSCH), etc.

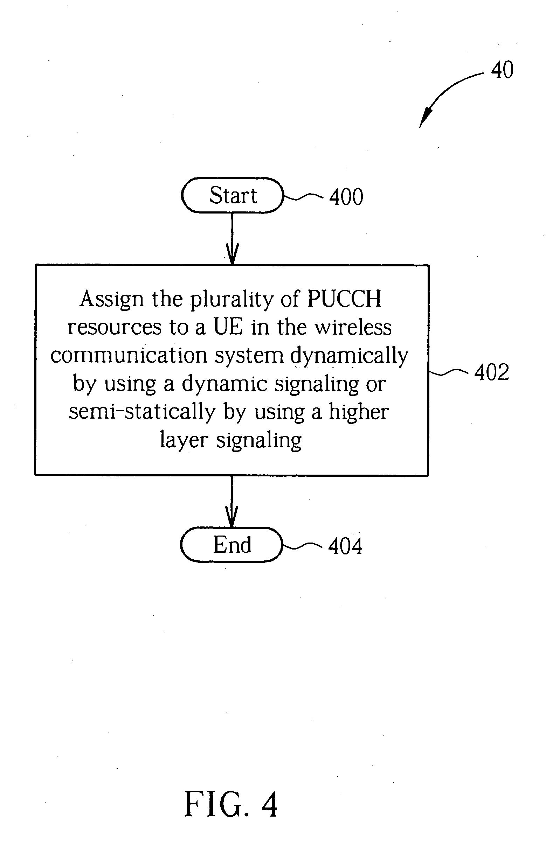

Please refer to Fig. 4, which is a flowchart of a process 40 according to an example of the present disclosure. The process 40 is utilized in the network of the wireless communication system 10 shown in Fig. 1, to handle a plurality of PUCCH resources. The process 40 may be compiled into the program code 214 and includes the following steps:

Step 400: Start.

Step 402: Assign the plurality of PUCCH resources to a UE in the wireless communication system dynamically by using a dynamic signaling or semi-statically by using a higher layer signaling.

Step 404: End.

According to the process 40, the network assigns the plurality of PUCCH resources to the UE in the wireless communication system 10 dynamically by using the dynamic signaling (e.g. a PDCCH with certain a DL control information (DCI) format), or semi-statically by using the higher layer signaling (e.g. a RRC signaling). Then, the UE can transmit UL control information (UCI) to the network by using the plurality of PUCCH resources. For example, one of the plurality of PUCCH resources can be a PUCCH radio resource, a corresponding PUCCH resource index (e.g. cyclic time shift or orthogonal spreading code used in assigned or configured PUCCH radio resource), a corresponding PUCCH region (e.g. new numbered of PUCCH region in assigned or configured PUCCH radio resource), and/or a corresponding PUCCH ACK/NACK resource index (e.g. used in assigned or configured PUCCH radio resource).

Further, the network may use dynamically or semi-statically signaling to assign or configure the PUCCH radio resource in the area other than PUCCH resource assigned or configured to the band edges to the UE, or may not assign band edges of a system bandwidth of the wireless communication system 10 for the plurality of PUCCH resources to the UE in the frequency domain. In other words, a PUCCH time-frequency radio resource (e.g. a resource block) is assigned or configured in an area to the UE other than those band edges (e.g. in additional configuration signaling). In this situation, the UE should support a non-contiguous PUSCH allocation, and the non-contiguous PUSCH allocation can be configured or enabled by the network.

Besides, the UE can be configured with a simultaneous transmission of a PUCCH and a PUSCH by the network. To avoid resource collision when the simultaneous transmission is applied, the UE determines not to use PUCCH radio resource to transmit the UL control information, i.e. the UE determines to transmit the UL control information by PUSCH transmission, if a PUSCH allocation overlaps with the PUCCH radio resource. Alternatively, the UE determines to puncture the PUSCH allocation according to the plurality of PUCCH radio resources to transmit the UL control information, i.e. the UE determines to use PUSCH/PUCCH multiplexing in radio resource to transmit the UL control information (which is similar to UCI on PUSCH), if the PUSCH allocation overlaps with the PUCCH radio resource. On the other hand, the network should determine whether PUCCH radio resource is used by the UE for PUSCH transmission according to a PUSCH allocation or is used for the UL control information transmitted by the UE, if the PUSCH allocation to the UE overlaps with the PUCCH radio resource. In other words, the network should extract the UL control information which may be encoded with different code rates correctly after receiving the UL control information from the UE. Please note that, the above illustration can also be applied when the UE is configured with a carrier aggregation configuration by the network.

Therefore, according to the above illustration and the process 40, the network is able to assign the plurality of PUCCH resources dynamically or semi-statically to the UE, to increase flexibility of transmitting the UL control information, so as to increase more scheduling opportunities.

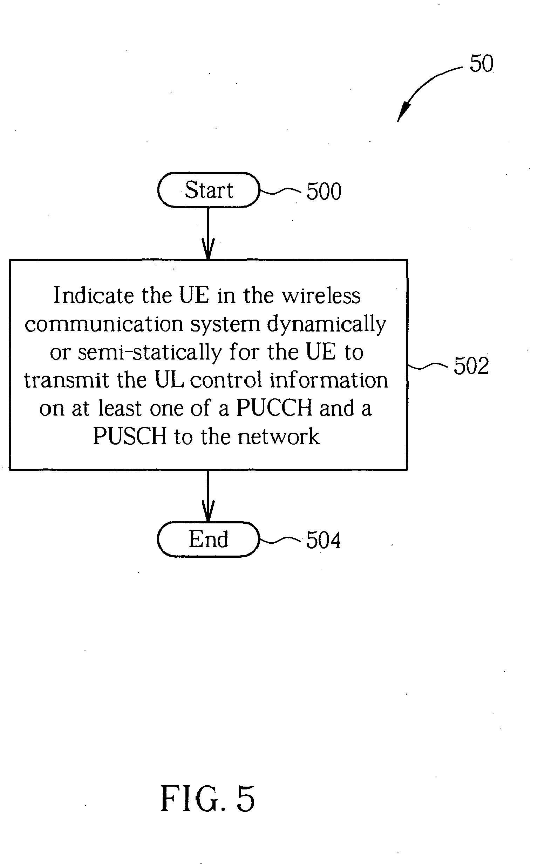

Please refer to Fig. 5, which is a flowchart of a process 50 according to an example of the present disclosure. The process 40 is utilized in the network of the wireless communication system 10 shown in Fig. 1, to handle UL control information reporting for a UE in the wireless communication. The process 50 may be compiled into the program code 214 and includes the following steps:

Step 500: Start.

Step 502: Indicate the UE in the wireless communication system dynamically or semi-statically for the UE to transmit the UL control information on at least one of a PUCCH and a PUSCH to the network.

Step 504: End.

According to the process 50, the network indicates the UE in the wireless communication system dynamically or semi-statically for the UE to transmit the UL control information on the at least one of the PUCCH and the PUSCH to the network. Then, the UE can transmit the UL control information to the network by using the at least one of the PUCCH and the PUSCH. In other words, the network indicates the allocation of PUCCH and/or PUSCH to the UE, so that the UE can transmit the UL control information accordingly.

Further, the network may indicate the UE in the wireless communication system dynamically by using at least one bit in a physical downlink (DL) control channel (PDCCH) or using at least one DL control information (DCI) format. Alternatively, the network may configure the UE in the wireless communication system by using a higher layer signaling (e.g. a RRC signaling) . According to above indicating methods, the UE can be configured to allow transmitting PUCCH and PUSCH simultaneously, or transmitting the UL control information on the PUCCH and the PUSCH simultaneously. In this situation, the network should know how and where to extract the UL control information from the at least one of the PUCCH and the PUSCH.

Besides, when there are a dynamic indication and a semi-static indication, the dynamic indication can be configured to have a priority higher than that of the semi-static indication. In other words, the UE transmits the UL control information according to semi-static UCI reporting configuration which the network indicates semi-statically, when the network does not indicate the UE dynamically (e.g. by at least one bit in PDCCH/at least a DCI format). On the other hand, the UE transmits the UL control information according to dynamic UCI reporting configuration which the network indicates dynamically, when the network indicates the UE dynamically. Please note that, the above illustration can also be applied when the UE is configured with a carrier aggregation configuration by the network. In other words, even though the UE has been configured with a semi-static UCI reporting configuration, the UE executes (dynamic) commands related a subframe when a dynamic indication (dynamic UCI reporting configuration) is also included in the subframe. That is, the dynamic indication has a priority higher than a priority of the semi-static UCI reporting configuration.

Therefore, according to the above illustration and the process 50, the network is able to handle the UL control information reporting for the UE of the wireless communication, to increase flexibility of transmitting the UL control information, so as to increase more scheduling opportunities.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

In conclusion, since the UE in the LTE-A system is going to be equipped with better power amplifiers, non-contiguous PUSCH allocation and a simultaneous transmission of the PUCCH and the PUSCH can be supported. The present invention provides ways for a network of the LTE-A system to allocate PUCCH resources and to indicate the UE how the PUCCH resources are allocated. In this situation, the UE can transmit UL control information more flexibly, and more scheduling opportunities are created for the UE. The system throughput can be increased.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling of a plurality of physical uplink (UL) control channel (PUCCH) resources of a network of a wireless communication system, the method comprising:
assigning the plurality of PUCCH resources to a mobile device in
the wireless communication system dynamically by using a dynamic signaling or semi-statically by using a higher layer signaling.

2. The method of claim 1 further comprising:
using dynamically or semi-statically signaling to assign or
configure the PUCCH radio resource in the area other than PUCCH resource assigned or configured to the band edges to the mobile device, or not assigning band edges for the plurality of PUCCH resources to the mobile device in the frequency domain.

3. The method of claim 1, wherein the mobile device supports a non-contiguous physical uplink (UL) shared channel (PUSCH) allocation, and the non-contiguous PUSCH allocation can be configured or enabled by the network.

4. The method of claim 1, wherein the mobile device is configured with a simultaneous transmission of a PUCCH and a PUSCH by the network.

5. The method of claim 1, wherein the mobile device is configured with a carrier aggregation configuration by the network.

6. The method of claim 1, wherein the mobile device does not use PUCCH radio resource for transmitting UL control information (UCI), if a PUSCH allocation overlaps with the PUCCH radio resource.

7. The method of claim 1, wherein the mobile device punctures a PUSCH allocation according to PUCCH radio resource for transmitting UL control information, if the PUSCH allocation overlaps with the PUCCH radio resource.

8. The method of claim 1, wherein the network determines whether PUCCH radio resource is used by the mobile device for PUSCH transmission according to a PUSCH allocation or is used for UL control information transmitted by the mobile device, if the PUSCH allocation to the mobile device overlaps with the PUCCH radio resource.

9. The method of claim 1, wherein PUCCH resource is at least one of PUCCH radio resource, corresponding PUCCH resource index, corresponding PUCCH region, and corresponding PUCCH acknowledgement/negative acknowledgement (ACK/NACK) resource index.

10. A method of handling uplink (UL) control information (UCI)
reporting of a network of a wireless communication system, the method comprising:
indicating a mobile device in the wireless communication system
dynamically or semi-statically for the mobile device to transmit the UL control information on at least one of a physical UL control channel (PUCCH) and a physical UL shared channel (PUSCH) to the network.

11. The method of claim 10, wherein indicating the mobile device in the wireless communication system dynamically comprises:
indicating the mobile device in the wireless communication system
dynamically by using at least one bit in a physical downlink (DL) control channel (PDCCH) or using at least one DL control information (DCI) format.

12. The method of claim 10, wherein indicating the mobile device in the wireless communication system semi-statically comprises:
configuring the mobile device in the wireless communication system
by using a higher layer signaling.

13. The method of claim 10, wherein the mobile device is configured to allow transmitting PUCCH and PUSCH simultaneously or transmitting the UL control information on the PUCCH and the PUSCH simultaneously.

14. The method of claim 10, wherein the mobile device is configured
with a carrier aggregation (CA) configuration.

15. The method of claim 10, wherein the dynamic indication is
configured to have a priority higher than that of the semi-static indication for the mobile device.
